# EUROPEAN PATENT SPECIFICATION

(11) **EP 2 800 901 B1**
(45) Date of publication and mention of the grant of the patent: **24.02.2016**
(21) Application number: 12799049.7
(22) Date of filing: 08.11.2012
(51) Int. Cl.: F04B 39/10, F16K 15/16

(54) **SUCTION VALVE ASSEMBLY FOR ALTERNATIVE COMPRESSOR**
SAUGVENTILANORDNUNG FÜR EINEN KOLBENKOMPRESSOR
ENSEMBLE CLAPET D'ASPIRATION POUR COMPRESSEUR ALTERNATIF

(30) Priority: 15.12.2011 BR PI1105143
(43) Date of publication of application: 12.11.2014
(73) Proprietor: Whirlpool S.A., 04578-000 São Paulo - SP (BR)
(72) Inventor: PIROVANO, Moacir, 89213-401 Joinville - SC (BR); RODRIGUES, Tadeu Tonheiro, 89219-300 Joinville - SC (BR); GAERTNER, Eduardo Luis, 89203-440 Joinville - SC (BR); RAMSDORF, Roberto, 89210-125 Joinville - SC (BR)
(74) Representative: Soldatini, Andrea
(86) International application number: PCT/BR2012/000437
(87) International publication number: WO 2013/104036

(56) References cited:
- EP-A2- 1 054 157
- US-A- 2 725 183
- US-A- 3 370 786
- US-A1- 2006 067 844

## Description

### Field of the Invention

The present invention refers to a suction valve assembly for alternative compressor, and, more specifically, to a suction valve assembly formed into a sole blade and particularly suitable for a compression chamber provided with at least two independent suction orifices.

### Background of the Invention

Alternative compressors comprising machines and/or devices capable of altering the pressure of a working fluid as well as pumping it are known from those skilled in the art. In this sense, and specifically speaking, alternative compressors are capable of altering the pressure of a working fluid by the controlled alteration of the volume of a compression chamber, which is usually defined by a cylindrical chamber suitable for receiving working fluid and a moving piston. Therefore, the compression chamber volume is alternatively altered (decreased and increased) in function of the displacement, in its interior, of the moving piston.

It should be point out that the present state of the art provides for compressors comprising a single compression chamber (small and large capacity compressors).

Subsequently, the working fluid (at high pressure) is discharged from the chamber. Such process is carried out periodically, and the period of time required for conducting a complete compression cycle depends on the work frequency of an electric engine housed inside the hermetic carcass, which generally corresponds to the frequency of the power supply network.

It is also known from those skilled in the art that the inlet (suction) and removal (exhaustion) steps of the working fluid inside the compression chamber consist of critical steps for the correct functioning of an alternative compressor, which have a direct effect on the performance parameters of a compressor, and, because of that the present state of the art comprises a wide range of valves for controlling suction and discharge of the working fluid into a compression chamber.

In this regard, it is further known that many compressors, particularly alternative compressors based on rotary engines, have their suction and discharge valves directly disposed between their cylindrical chamber and a valve plate. Such arrangements are especially functional when used in reed valves.

Generally, a reed suction valve consists of a thin metal blade with a contour whose edge is a sealing surface of a suction orifice, and the body connects the sealing surface with a valve fixation point. In general, the suction valve edge should seal the suction orifice during the steps of compressing and discharging working fluid, and for this reason the contour follows the orifice geometry to ensure a good contact and allow for the non-pressurized fluid to pass during the suction step. Thus, and according to the working frequency of a compressor, a reed of a valve plate should be designed to present fast responses and reduced bending stress. A functional example of a plate suction valve is described in US Patent 4,642,037.

With regard to suction valve assembly, there can basically be found three configurations of assembly: isolated reed, reed with a contour mask and interim valve. Examples of isolated valve can be found in US Patent 6,971,168; valve with a contour mask in US Patent 5,197,867; and interim valve in US Patent 4,642,037 and also in US Patent 5,197,867.

According to the present state of the art, using single orifices, one for suction and one for discharge, broadly fulfills, in terms of reliability and performance, the compressor designs, mainly low mass flow compressors and household applications. Nevertheless, multi-orifice configurations better meets the optimization of valve behavior, specifically concerning response speed, and increase in robustness of the valve structure to mechanical demands, thereby significantly improving valve lifetime, or reliability, which is an important parameter since compressors are required to have a lifetime of one decade or more.

In this regard, for higher capacity compressors applied to refrigeration of commercial systems, an increase of orifices is needed to allow for more freedom to gas flow. Such increase is commonly working as critical point since during the time at which said valve is seated over the orifice to ensure sealing, high pressure acts on the surface just above said orifice, pushing the valve inwards the orifice and causing bending. Said bending may reach critical valves and to circumvent this problem thickness of the valve is increased, and in compensation said valve is rendered more resistant to bending stress, thereby cannibalizing the gains of the increase in the passage orifice.

The solution provided by multi-orifices allows for increasing the passage area by dividing into more than one orifice with no need to increase valve thickness and, consequently, with no side effects on dynamics thereof. Particularly, this solution meets the requirements of the suction orifice/valve design, which is responsible for volumetric and energetic performance of the compressor by which reason is common to use suction orifices larger than that of the discharge. Solutions of multi-orifice type where two or more orifices are sealed by the same valve (WO 2008/047515 and US Patent 5,197,867) and with independent orifice and valve (US Patent 2,725,183) can be found. The concept in which a single valve acts on more than one orifice is undesirable from the point of view of sealing and dynamics. In order that sealing is effective, the valve seat on the orifice edge should be plane; nevertheless, as the valve deforms within the orifice, such configuration is not effectively attained when 2 epicenters of deformation are present, leading to leakages. As far as dynamics is concerned, a large body area is required for valve stability, thereby promoting an increase in mass and rigidity of the valve, rendering it slow.

Solutions concerning independent multi-pairs of orifice/valve can be found in large size compressors, as described in US Patent 2,725,183. However, configurations, as disclosed in said US Patent 2,725,183, do not make a better use of the solutions provided by multi-orifice. With regard to suction valves, it is noted that an orifice arrangement determines that the valves possess different lengths, resulting in rigidity and frequency parameters of different response such that a valve with less rigidity in the case the one in the middle is more efficient concerning the opening movement, thereby cannibalizing gas flow of the other two orifices. In brief, there is no synchronism in the ways that such valve configuration in this arrangement responds. It is essential that valves have synchronism at the opening and closing times as well as the reached open level, in order to ensure sealing and dynamical behaviors which will justify adopting such solution. Another visible drawback of this present configuration is the obstruction of the central discharge orifice by the center suction valve. Hence, the solution of multi-orifices requires that all orifice/valve pairs act in synchronism and in equilibrium, which factors are directly related to geometry and layout.

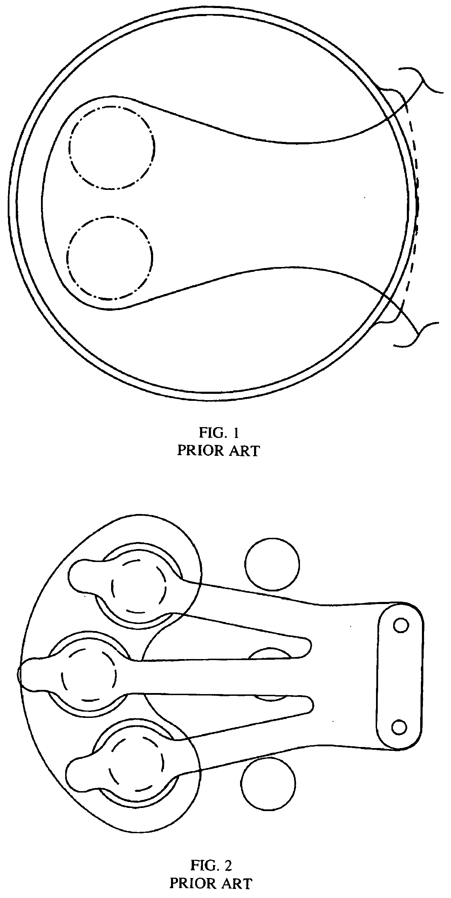

Furthermore, Figs. 1 and 2 illustrate suction valves as mentioned above, which present the advantages and limitations explained above.

Still regarding to the drawbacks of the prior art, document US 2006/067844 presents an alternative compressor comprising suction valves, which are asymmetrically disposed between each other. The mainly disadvantage in US 2006/067844 is that the disposition of the valves leads to an unequal opening of the valves, which means that the flow flux through both suction orifices will not be the same, consequently the valves will be more mechanically requested and some interference between the flow may be observed.

On the other hand prior art document US 3,370,786, presents the suction valves that are symmetrical in relation to a longitudinal axis that connects the ends of said valves; but it may be noted that symmetrical valves will not open in an inclined way, so the refrigerant fluid flowing through suction orifice corresponding to the first suction valve will interfere in refrigerant fluid flowing through suction orifice corresponding to the second suction valve.

In addition to having all the above-mentioned drawbacks, it has been also observed that most of the presently existing suction valves comprise a dead volume effect (empty space where compressed gas at high pressure and temperature is retained and is no longer pumped to the system), this effect being highly undesirable, because after all it implicates significant losses in volumetric yield of the compressor, in addition to further comprising a negative aspect for the own functioning of those suction valves once this retained gas should be expanded into the compression chamber, thereby increasing the time at which the opening minimal pressure of the suction valve is obtained, resulting in a delay in the opening thereof. Generally speaking, the dead volume effect is mainly found in symmetrical suction valves, such as can be seen from the state-of-the art embodiment illustrated in Figure 2.

Based on the scenario, the present patent of invention was developed.

### Objects of the Invention

By this way, an object of the present invention is to provide a suction valve assembly particularly suitable for a sole compressor chamber and containing multiple suction orifices.

In this sense, one object of the present invention is to provide suction valves containing actuation (sealing/opening regions) independent from each other and having a symmetrical pattern of functioning, resulting in less mass and rigidity and better sealing of suction orifices.

A further object of the invention is that the suction valve assembly, as presently disclosed, is preferably suitable for compression chamber heads of tiny dimensions, where a space for optimizing the orifice arrangements and valve geometry is limited.

### Summary of the Invention

All the objects above are fully achieved by means of a suction valve assembly for alternative compressor, which is of the type intended for a compression chamber provided with at least two suction orifices.

Said suction valve assembly itself comprises at least one blade provided with at least one through orifice. Said blade further includes at least two independent suction valves defined in one same blade. In this regard, it is observed that each of said suction valves comprises a functional edge intended for a sole suction orifice of valve plate. Furthermore, the suction valves are separated therebetween for at least a through slit. Preferably, at least one of said suction valves is asymmetric.

Further preferably, each of the functional edges comprises the free end of its respective valve, and, as a result, said functional edges of suction valves and the through orifices of the blade (discharge orifices) are disposed at one same area defined by a single compression chamber. Optionally, said suction valves are arranged between said through orifices.

### Brief Description of the Figures

The preferred embodiment of the present invention will be described in detail based on figures listed below, wherein:
Figs. 1 and 2 show suction valve assemblies of the state of the art;
Figure 3 shows a preferred embodiment of the suction valve assembly in accordance with the present invention; and
Figure 4 shows a schematic view of the valve plate assembly and the suction valve assembly in accordance with the present invention.

### Detailed Description of the Invention

In accordance with the main objects of the present invention, a new suction valve assembly for alternative compressor, whose arrangement of its members makes it particularly suitable for a single suction chamber (not shown) comprising at least independent suction orifices (not shown), is disclosed.

Therefore, said suction valve assembly comprises at least two sealing/opening edges for independent suction orifices. Especially, the number of sealing/opening edges of the suction valve assembly is similar to the number of independent suction orifices 21 housed in valve plate 2 of an alternative compressor.

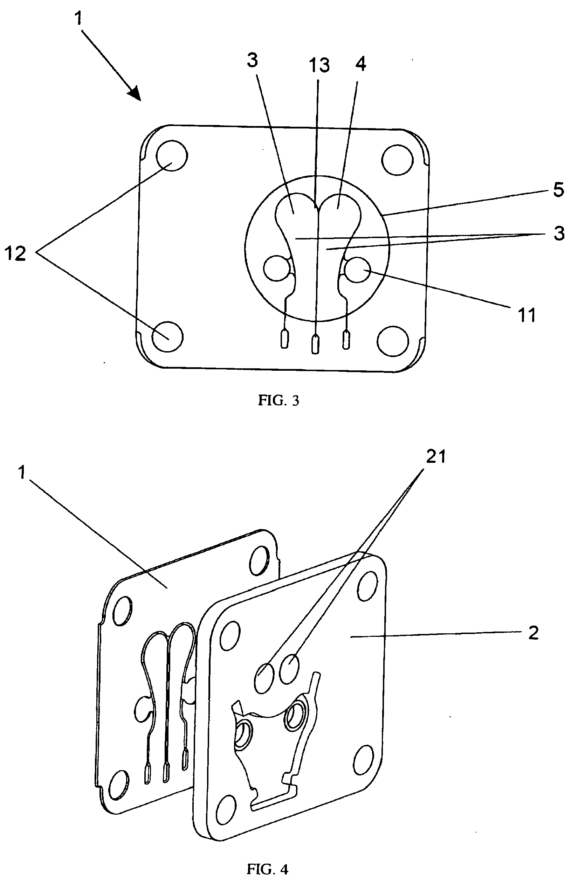

By this way, and based on such concepts, reference is made to Figs. 3 and 4 in order to give an detailed description of the preferred embodiment of the present invention. It is herein pointed out that in this description, sealing/opening edges of suction valves are designated "functional edges."

According to the preferred embodiment of the present invention, the suction valve assembly is defined in blade 1 of an essentially square perimeter made of a substantially and with substantially resilient properties. Preferably, blade 1 is made of a thin metal alloy.

As illustrated in Figs. 3 and 4, blade 1 comprises two through orifices 11, four alignment means 12 and other through slits 13 having two operational edges 4 of two suction valves 3.

Said two through orifices 11 are orifices intended for the passage of discharge flow from a compressor chamber (not shown). In accordance with the present preferred embodiment, said through orifices 11 are separated from the other through slits 13, that is, said through slits 13 are disposed between the through orifices 11.

Alignment means 12 comprise four through orifices, each placed at one of the edges of blade 1. Said through orifices are intended to align said blade 1 with valve plate 2 and with a block of the mechanical compressor assembly (not shown), which comprise orifices equally positioned for receiving fixation members (not shown), such as, for example, bolts and the like.

Through slits 13, as depicted in Fig. 3, are M-shaped disposed so as to define two side ends and a central end.

The layout of said through slits 13 then defines two parallel suction valves 3, which are spaced between each other by one of through slits 13, and, particularly, by central through slit 13.

Each of said suction valves 3 has a functional edge 4.

In this regard, functional edges 4 are capable of resilient (and millimetric) movement in accordance with suction flows of the alternative compressor. It is worth to mention that said functional edges 4 are independent from one another and, then, each of said functional edges 4 seals its respective suction orifice of compression chamber (not shown) during the exhaustion steps of the alternative compressor and releases a flow passage during the suction steps of the alternative compressor.

Furthermore, when an alternative compressor is under high load and high pressures, sealing is not compromised, after all (and because they are independent) each of said functional edges 4 defines a sealing area substantially similar to the suction orifice area, with no pressure at other points (as occurring in valves of the present state of the art, in which one same functional edge seals more than one suction orifice).

In addition to the advantages mentioned above, it is worth pointing out that due to its layout, blade 1 provides either through orifices 11 or functional edges 4 (and in this case, most of the suction valves 3) in the inner portion of an area 5 analogous to the area of the compression chamber (not shown).

This feature ends up allowing for the adoption of multiple orifices on compacted heads of reduced size compressors since it is possible to dimension two suction orifices and two discharge orifices substantially near and in an optimized functional form (which is virtually impossible to attain with the embodiments of the state of the art, which are either compact/miniaturized or use more than two suction/discharge orifices in a excessively spaced form).

Further, it should be mentioned that, according to the preferred embodiment of the present invention, suction valves 3 are asymmetric relative to the longitudinal shaft, in addition to the fact that it does not require changes in the response characteristics of a valve and sealing efficiency and it significantly decreases the "dead volume effect" because, after all, there is not empty space for causing the working fluid to be retained.

After describing the preferred embodiments of the present invention, it should be understood that the scope thereof contemplates other possible variations, which is only limited by the content of the set of claims, including possible equivalent means.

## Claims

1. Alternative compressor comprising a suction valve assembly intended for a compressor chamber provided with two suction orifices and comprising at least one blade (1) provided with at least one through orifice (1); said suction valve assembly comprises:
two independent suction valves (3) disposed at one same blade (1), wherein at least one of said suction valves (3) is asymmetric in relation to its longitudinal axis;
each of said two suction valves (3) comprises a functional edge (4) that seals a single suction orifice (21) of the valve plate (2), wherein the functional edges (4) of suction valves (3) and said through orifices (11) of blade (1) are disposed at a same area (5) defined by a single compression chamber;
said suction valves (3) are separated from one another by at least one through slit (13) and are disposed between the discharge through orifices (11); wherein
said suction valve assembly is **CHARACTERIZED in that**:
said suction valves (3) are symmetrically and parallelly disposed in relation to an axis of symmetry defined by a portion of the slit (13), wherein the portion of the slit (13) is rectilinear and parallel to the longitudinal axis of the suction valves (3).

2. Alternative compressor in accordance with claim 1, **CHARACTERIZED in that** one of the functional edges (4) comprises a free end of its respective valve (3).

## Patentansprüche

1. Kolbenkompressor, enthaltend eine Saugventilanordnung, die für eine Kompressorkammer vorgesehen ist, die mit zwei Saugöffnungen versehen ist und wenigstens ein Blatt (1) enthält, das mit wenigstens einer Durchgangsöffnung (11) versehen ist;
wobei die Saugventilanordnung enthält:
zwei unabhängige Saugventile (3), die an demselben einen Blatt (1) angehordnet sind, wobei wenigstens eines der Saugventile (3) in Bezug auf seine Längsachse asymmetrisch ist;
jedes der zwei Saugventile (3) einen funktionalen Rand (4) enthält, der eine einzelne Saugöffnung (21) der Ventilplatte (2) abdichtet, wobei die funktionalen Ränder (4) der Saugventile (3) und die Durchgangsöffnungen (11) des Blattes (1) an demselben Bereich (5) angeordnet sind, der durch einen einzelne Kompressionskammer definiert ist;
die Saugventile (3) durch wenigstens einen Durchgangsschlitz (13) voneinander getrennt sind und zwischen den Ausgabedurchgangsöffnungen (11) angeordnet sind, wobei die Saugventilanordnung **DADURCH GEKENNZEICHNET ist, dass** die Saugventile (3) symmetrisch und parallel in Bezug auf eine Symmetrieachse angeordnet sind, die durch einen Teil des Schlitzes (13) definiert ist, wobei der Teil des Schlitzes (13) geradlinig und parallel zu der Längsachse der Saugventile (3) ist.

2. Kolbenkompressor nach Anspruch 1, **DADURCH GEKENNZEICHNET, dass** einer der funktionalen Ränder (4) ein freies Ende seines entsprechenden Ventils (3) enthält.

## Revendications

1. Compresseur alternatif comprenant un ensemble de clapets d'aspiration destiné à une chambre de compresseur comportant deux orifices d'aspiration et au moins une lame (1) pourvue d'au moins un orifice traversant (11) ; ledit ensemble de clapets d'aspiration comprend:
deux clapets d'aspiration indépendants (3) disposés sur une même lame (1), dans lequel au moins l'un des dits clapets d'aspiration (3) présente une forme asymétrique par rapport à son axe longitudinal ;
chacun des dits deux clapets d'aspiration (3) comprend un bord fonctionnel (4) qui ferme un seul orifice d'aspiration (21) de la plaque de clapet (2), dans lequel les bords fonctionnels (4) des clapets d'aspiration (3) et lesdits orifices traversants (11) de la lame (1) sont disposés dans une même zone (5) délimitée par une chambre de compression unique ;
lesdits clapets d'aspiration (3) étant séparés l'un de l'autre par au moins une fente traversante (13) et sont disposés entre les orifices traversants de décharge (11); dans lequel ledit ensemble de clapets d'aspiration est **caractérisé en ce que** :
lesdits clapets d'aspiration (3) sont disposés symétriquement et parallèlement rapport à un axe de symétrie défini par une portion de la fente (13), dans lequel la portion de fente (13) est rectiligne et parallèle à l'axe longitudinal des clapets d'aspiration (3)

2. Compresseur alternatif en accord avec la revendication 1, **caractérisé en ce qu'**un des bords fonctionnels (4) comprend une extrémité libre de son clapet respectif (3).
